# EUROPEAN PATENT APPLICATION

(11) **EP 4 727 177 A1**
(43) Date of publication of application: **15.04.2026**
(21) Application number: 24822624.3
(22) Date of filing: 06.06.2024
(51) Int. Cl.: H04W 4/029

(54) **METHOD AND APPARATUS FOR PROCESSING EMERGENCY CALL, AND NETWORK-SIDE DEVICE**

(30) Priority: 12.06.2023 CN 202310696965
(71) Applicant: Vivo Mobile Communication Co., Ltd., Dongguan, Guangdong 523863 (CN)
(72) Inventor: JIN, Hui, Dongguan, Guangdong 523863 (CN); WANG, Wen, Dongguan, Guangdong 523863 (CN)
(74) Representative: Walaski, Jan Filip
(86) International application number: PCT/CN2024/097702
(87) International publication number: WO 2024/255673

(57) **Abstract**

The present application belongs to the technical field of wireless communications. Disclosed are a method and apparatus for processing an emergency call, and a network-side device. The method comprises: a first network element receiving a first emergency call request which is sent by a remote user equipment; the first network element acquiring an identifier of a relay user equipment corresponding to the remote user equipment; and the first network element sending a second emergency call request to a second network element, wherein the second emergency call request carries the identifier of the relay user equipment.

## Description

### CROSS-REFERENCE TO RELATED APPLICATIONS

This application claims priority to Chinese Patent Application No. 202310696965.8, filed on June 12, 2023 and entitled "EMERGENCY CALL HANDLING METHOD AND APPARATUS, AND NETWORK-SIDE DEVICE", which is incorporated herein by reference in its entirety.

### TECHNICAL FIELD

This application pertains to the field of wireless communication technology, and specifically relates to an emergency call handling method and apparatus, and a network-side device.

### BACKGROUND

With the development of network informatization, to expand network coverage, the existing mainstream solution is to use a relay terminal (relay UE) to enable a terminal at the cell edge or outside network coverage to access the network through the relay terminal (relay UE), thereby obtaining network services. In a layer-3 UE-to-network relay (Layer-3 UE-to-Network relay) communication scenario, the relay terminal (relay UE) can provide relay services for a remote terminal (Remote UE). For example, the relay terminal (relay UE) receives service data from the remote terminal (Remote UE) and forwards it to the network, or the relay terminal (relay UE) receives data sent by the network to the remote terminal (Remote UE) and forwards the data to the remote terminal (Remote UE).

When a terminal initiates an internet protocol (Internet Protocol, IP) multimedia subsystem (IP Multimedia Subsystem, IMS) emergency call, the emergency call session control function (Call Session Control Function, CSCF) receives an emergency call request from the UE and sends a request to the location retrieval function (Location Retrieval Function, LRF) to validate the location information carried by the UE (for example, a cell identity cell id) or to obtain the location information of the UE (for example, when the UE does not send location information).

In the process of the relay terminal (relay UE) providing relay services for the remote terminal (Remote UE), when the remote terminal (Remote UE) initiates a (IP multimedia subsystem) emergency call through the relay terminal (relay UE), since the remote terminal (Remote UE) is connected to the 4G or 5G network via the relay terminal, the remote terminal may not be registered with the 4G or 5G network. Consequently, the location retrieval function (Location Retrieval Function, LRF) may be unable to obtain the location information of the remote terminal. This causes the emergency call session control function (Emergency CSCF, E-CSCF) to reject the IMS emergency call initiated by the remote terminal due to the inability to obtain the location of the remote terminal, resulting in emergency call failure.

### SUMMARY

Embodiments of this application provide an emergency call handling method and apparatus, and a network-side device, so as to address the issue of emergency call failure caused by an E-CSCF rejecting an IMS emergency call initiated by a remote terminal due to the inability to obtain the location of the remote terminal.

According to a first aspect, an emergency call handling method is provided. The method includes: receiving, by a first network element, a first emergency call request sent by a remote terminal; obtaining, by the first network element, an identifier of a relay terminal corresponding to the remote terminal; and sending, by the first network element, a second emergency call request to a second network element, where the second emergency call request carries the identifier of the relay terminal.

According to a second aspect, an emergency call handling method is provided. The method includes: receiving, by a second network element, a second emergency call request sent by a first network element, where the second emergency call request carries an identifier of a relay terminal; and sending, by the second network element, the identifier of the relay terminal to a fourth network element.

According to a third aspect, an emergency call handling apparatus is provided. The apparatus includes: a first receiving module configured to receive a first emergency call request sent by a remote terminal; an obtaining module configured to obtain an identifier of a relay terminal corresponding to the remote terminal; and a first sending module configured to send a second emergency call request to a second network element, where the second emergency call request carries the identifier of the relay terminal.

According to a fourth aspect, an emergency call handling apparatus is provided. The apparatus includes: a second receiving module configured to receive a second emergency call request sent by a first network element, where the second emergency call request carries an identifier of a relay terminal; and a second sending module configured to send the identifier of the relay terminal to a fourth network element.

According to a fifth aspect, a network-side device is provided. The network-side device includes a processor and a memory, where the memory stores a program or instructions capable of running on the processor, and when the program or instructions are executed by the processor, the steps of the method according to the first aspect are implemented, or the steps of the method according to the second aspect are implemented.

According to a sixth aspect, a readable storage medium is provided, where the readable storage medium stores a program or instructions, and when the program or instructions are executed by a processor, the steps of the method according to the first aspect are implemented, or the steps of the method according to the second aspect are implemented.

According to a seventh aspect, a wireless communication system is provided, including a network-side device, where the network-side device is configured to perform the steps of the method according to the first aspect or the steps of the method according to the second aspect.

According to an eighth aspect, a chip is provided. The chip includes a processor and a communication interface, where the communication interface is coupled to the processor, and the processor is configured to run a program or instructions to implement the method according to the first aspect or the method according to the second aspect.

According to a ninth aspect, a computer program/program product is provided, where the computer program/program product is stored in a storage medium, and the program/program product is executed by at least one processor to implement the steps of the method according to the first aspect or the steps of the method according to the second aspect.

In the embodiments of this application, after receiving a first emergency call request sent by a remote terminal, a first network element obtains an identifier of a relay terminal corresponding to the remote terminal, and then sends a second emergency call request carrying the identifier of the relay terminal to a second network element. This enables a network side to obtain corresponding location information based on the identifier of the relay terminal for emergency call handling, thereby addressing the issue of emergency call failure caused by an E-CSCF rejecting an IMS emergency call initiated by the remote terminal due to the inability to obtain the location of the remote terminal.

### BRIEF DESCRIPTION OF DRAWINGS

FIG. 1 is a block diagram of a wireless communication system to which an embodiment of this application is applicable;
FIG. 2 is a schematic flowchart of an emergency call handling method provided in the related art;
FIG. 3 is a schematic flowchart of an emergency call handling method according to an embodiment of this application;
FIG. 4 is another schematic flowchart of an emergency call handling method according to an embodiment of this application;
FIG. 5 is still another schematic flowchart of an emergency call handling method according to an embodiment of this application;
FIG. 6 is a schematic structural diagram of an emergency call handling apparatus according to an embodiment of this application;
FIG. 7 is another schematic structural diagram of an emergency call handling apparatus according to an embodiment of this application;
FIG. 8 is a schematic structural diagram of a communication device according to an embodiment of this application; and
FIG. 9 is a schematic structural diagram of hardware of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or more first objects. In addition, "or" in this application indicates at least one of the connected objects. For example, "A or B" covers three schemes, that is, scheme 1: including A and not including B; scheme 2: including B and not including A; and scheme 3: including both A and B. The character "/" generally indicates that the associated objects before and after it are in an "or" relationship.

The term "indication" in this application can be either a direct indication (or explicit indication) or an indirect indication (or implicit indication). Direct indication can be understood as the sender explicitly informing the receiver of content such as specific information, operations to be performed, or requested results in the sent indication. Indirect indication can be understood as the receiver determining corresponding information based on the indication sent by the sender, or making judgments and determining operations to be performed, requested results, or the like based on the judgment results.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

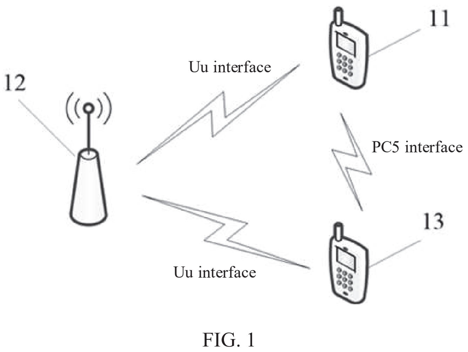

FIG. 1 is a block diagram of a wireless communication system to which an embodiment of this application is applicable. As shown in FIG. 1, the wireless communication system includes a relay terminal 11, a network-side device 12, and a remote terminal 13. In the embodiments of this application, the remote terminal 13 communicates with the relay terminal 11 via a PC5 (sidelink) interface, and the relay terminal 11 communicates with the network-side device 12 via a Uu interface.

The relay terminal 11 may also be referred to as a relay (relay) terminal device or relay user equipment (User Equipment, UE), and the remote terminal 13 may also be referred to as a remote terminal device or remote (remote) UE. The relay terminal 11 and the remote terminal 13 may be terminal-side devices such as mobile phones, tablet personal computers (Tablet Personal Computer), laptop computers (Laptop Computer) or notebook computers, personal digital assistants (Personal Digital Assistant, PDA), palmtop computers, netbooks, ultra-mobile personal computers (ultra-mobile personal computer, UMPC), mobile internet devices (Mobile Internet Device, MID), wearable devices (Wearable Device), vehicle-mounted equipment (VUE), pedestrian terminals (PUE), or other. The wearable device includes a bracelet, earphones, glasses, and the like. In addition to the above terminal devices, they may also be chips within terminals, such as modem (Modem) chips or systems on chip (System on Chip, SoC). It should be noted that the embodiments of this application do not limit the specific types of the relay terminal 11 and the remote terminal 13. The network-side device 12 may be a base station or a core network, where the base station may be referred to as a Node B, an evolved Node B, an access point, a base transceiver station (Base Transceiver Station, BTS), a radio base station, a radio transceiver, a basic service set (Basic Service Set BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or other suitable terms in the field. Provided that the same technical effect is achieved, the base station is not limited to any specific technical term. It should be noted that in the embodiments of this application, only the base station in the NR system is used as an example, but the specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a User Plane Function (user plane function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a Home Subscriber Server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of this application, only the core network device in the NR system is used as an example for description, but the specific type of the core network device is not limited.

In a layer-3 UE-to-network relay (Layer-3 UE-to-Network relay) communication scenario, the relay terminal (relay UE) can provide relay services for the remote terminal (Remote UE). For example, the relay UE receives service data from the remote UE and routes the service data to the network, or the relay UE receives data sent by the network to the remote UE and routes the data to the remote UE. During the process of the relay UE providing relay services for the remote UE, the relay UE assigns an IP address to the remote UE, and the remote UE uses the IP address assigned by the relay UE to generate an IP packet. If the relay UE itself has only an IPv4 address, the relay UE assigns a private network IP address to the remote UE, for example, the assigned private network IP address being IP-A. After receiving an IP packet containing the IP-A from the remote UE, the relay UE replaces the IP-A with IP-B through NAT (Network Address Translation, network address translation) and sends the IP packet to the network. IP-B may be an IP address assigned to the relay UE by the network.

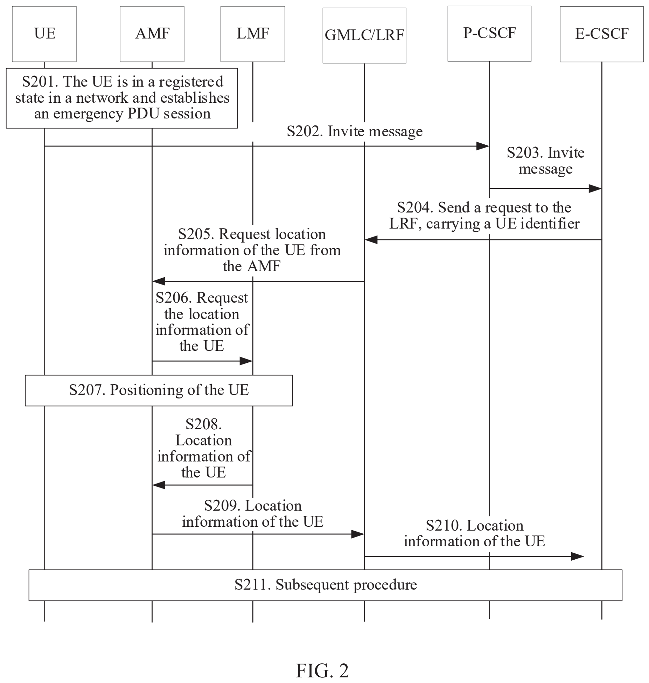

FIG. 2 is a schematic flowchart of an emergency call handling method provided in the related art. As shown in FIG. 2, the method may include the following steps.

S201: A UE is in a registered state in a 5G network, and the UE establishes an emergency protocol data unit (Protocol Data Unit, PDU) session. It should be noted that the 5G network is used as an example herein, but the method is equally applicable to 4G or 6G networks.

S202: The UE initiates an IMS emergency call through an Invite message, where the Invite message includes IMS identifier information of the UE and location information of the UE, such as a cell (cell) identity (identity, ID) of the UE.

S203: A proxy call session control function (Proxy CSCF, P-CSCF) obtains an identifier of the UE based on the IMS identifier and sends the Invite message and the identifier of the UE to an emergency call session control function (Emergency CSCF, E-CSCF).

S204: The emergency call session control function (Emergency CSCF, E-CSCF) sends a request carrying the UE identifier to an LRF, where the message is used to validate the cell ID carried by the UE or to request for a location of the UE.

S205: The LRF obtains, based on the UE identifier, an access and mobility management function (Access and Mobility Management Function, AMF) serving the UE and requests the location information of the UE from the AMF.

S206: The AMF requests the location information of the UE from a location management function (Location Management Function, LMF).

S207: The LMF performs a positioning function to obtain the location information of the UE.

S208: The LMF sends the location information of the UE to the AMF.

S209: The access and mobility management function (Access and Mobility Management Function, AMF) sends the location information of the UE to the LRF.

S210: The LRF sends the location information of the UE or a validation result to the E-CSCF.

S211: The E-CSCF obtains, based on the location of the UE, a PSAP (Public Safety Access Point) serving the UE and completes the subsequent emergency call procedure.

However, in a relay communication scenario, when the remote UE initiates an IMS emergency call through the relay UE, the E-CSCF receives the emergency call request sent by the UE, and then sends a request to the LRF (Location Retrieval Function, location retrieval function) to validate (validate) the location information (for example, a cell ID) sent by the UE or to obtain the location information of the UE (for example, when the UE does not send location information). Since the remote UE is connected to a 4G or 5G network through the relay UE, the remote UE may not be registered with the 4G or 5G network. Consequently, the LRF cannot obtain the location information of the remote UE, causing the E-CSCF to reject the IMS emergency call initiated by the remote UE due to the inability to obtain the location of the remote UE.

To address the above technical problem, this application provides an emergency call handling method and apparatus, and a network-side device.

The following details the emergency call handling method and apparatus, and the network-side device in the embodiments of this application with reference to the accompanying drawings through some embodiments and application scenarios thereof.

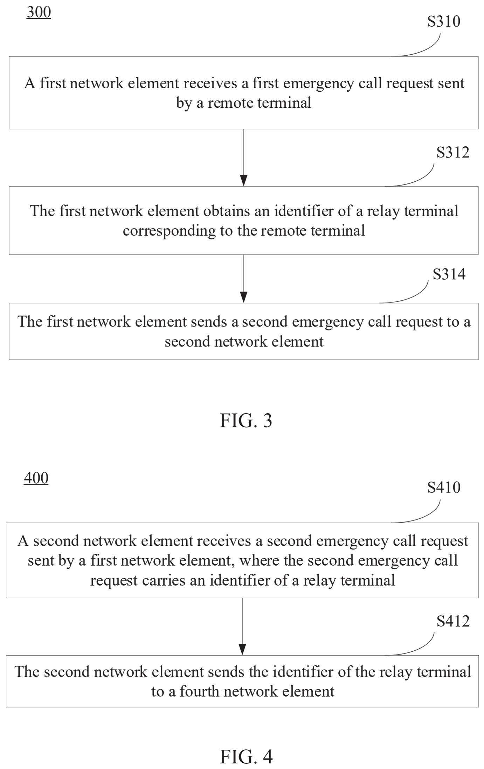

FIG. 3 is a schematic flowchart of an emergency call handling method according to an embodiment of this application. The method 300 may be performed by a first network element. In other words, the method may be performed by software or hardware installed on the first network element.

In the embodiments of this application, the first network element may be a functional entity in the core network for proxy call session control, for example, the first network element may be a proxy call session control function (Proxy CSCF, P-CSCF) in the core network. As shown in FIG. 3, the method may include the following steps.

S310: The first network element receives a first emergency call request sent by a remote terminal.

For example, the remote terminal may send the first emergency call request through an invite (Invite) message, and the first network element receives the first emergency call request.

In the embodiments of this application, the remote terminal may send the first emergency call request through a relay terminal, and the relay terminal forwards the first emergency call request to a network side.

For example, the remote terminal may establish a PC5 connection to the relay terminal, where the relay terminal is in a registered state in the network. Then the remote terminal sends the first emergency call request to the relay terminal via the PC5 interface, and the relay terminal, after receiving the first emergency call request via the PC5 interface, forwards the first emergency call request to the network side.

Optionally, the first emergency call request may carry the following information:
(1) IMS identifier information of the remote UE, for example, information such as the IP address assigned to the remote UE by the relay UE;
(2) location information of the relay UE, for example, the cell ID of the UE, where the remote UE may obtain the location information of the relay UE from the relay UE;
(3) access type "3GPP-NR-ProSe-L3UNR", where the access type "3GPP-NR-ProSe-L3UNR" indicates that a value of access type is "3GPP-NR-ProSe-L3UNR (3GPP-NR-ProSe-L3UNR)", which may also be expressed as access type="3GPP-NR-ProSe-L3UNR"; and
(4) access type "3GPP-E-UTRAN-ProSe-UNR", where the access type "3GPP-E-UTRAN-ProSe-UNR" indicates that a value of access type is "3GPP-E-UTRAN-ProSe-UNR (3GPP-E-UTRAN-ProSe-UNR)", which may also be expressed as access type="3GPP-E-UTRAN-ProSe-UNR".

It should be noted that the access type carried in the first emergency call request may be included in a P-Access-Network-Info (P-Access-Network-Info) header of the IMS message.

It should be noted that in a 5G communication system, when the remote UE sends the first emergency call request through the relay UE, the value of access type carried is 3GPP-NR-ProSe-L3UNR; in a 4G communication system, when the remote UE sends the first emergency call request through the relay UE, the value of access type carried is 3GPP-E-UTRAN-ProSe-UNR. Similarly, in a 6G communication system, when the remote UE sends an IMS message through the relay UE, the value of access type carried may be 3GPP-6G-ProSe-L3UNR, where 6G may be replaced according to the actual naming of the 6G communication system. For example, when 6G is named FR, the value of access type may be 3GPP-FR-ProSe-L3UNR.

S312: The first network element obtains an identifier of a relay terminal corresponding to the remote terminal.

In the embodiments of this application, the first network element may obtain the identifier of the relay terminal based on the value of the access type carried in the first emergency call request.

For example, the first network element determines, based on the access type "3GPP-NR-ProSe-L3UNR" carried in the first emergency call request, that the first emergency call request is sent by the remote UE through the relay UE, and obtains an ID of the relay UE.

In one implementation, the first network element may obtain the identifier of the relay terminal locally.

For example, before S310, the first network element receives an IMS register (Register) request from the remote terminal, where the IMS Register request carries the IP address assigned to the remote terminal by the relay terminal. The first network element requests an identifier of the UE corresponding to the IP address from a third network element (for example, a PCF) based on the IP address. The third network element determines that the IP address is an address assigned to the relay terminal, and thus returns the identifier of the relay terminal to the first network element. The first network element stores the identifier of the relay terminal. When receiving the first emergency call request sent by the remote terminal, the first network element obtains the identifier of the relay terminal from locally stored data.

It should be noted that when the relay terminal establishes a PDU session, the 5G network may assign a set of IP addresses, for example, 10 IP addresses, to the relay terminal. After the remote terminal is connected to the relay terminal, the relay terminal assigns one of these IP addresses (for example, one of the 10 IP addresses) to the remote terminal. The remote terminal has this IP address carried in the first emergency call request, and the first network element can determine the relay terminal corresponding to the remote terminal based on this IP address.

In another implementation, the first network element may alternatively obtain the identifier of the relay terminal from a third network element.

For example, based on the IP address carried in the first emergency call request, the first network element requests the identifier of the UE corresponding to this IP address from the third network element (for example, the PCF). The third network element determines that this IP address is an address assigned to the relay terminal, and thus returns the identifier of the relay terminal to the first network element.

For example, the first network element may send one of the following message requests to the third network element:
Npcf_PolicyAuthorization_Create; and
Npcf_PolicyAuthorization_Update.

The above message requests may include the IP address of the relay UE.

In the embodiments of this application, the identifier of the relay terminal may include at least one of the following:
a mobile station international integrated services digital network (Mobile Station international ISDN number, MSISDN) number of the relay terminal;
a generic public subscription identifier (Generic Public Subscription Identifier, GPSI) of the relay terminal;
an international mobile subscriber identity (International Mobile Subscriber Identity, IMSI) of the relay terminal; and
a subscription permanent identifier (SUbscription Permanent Identifier, SUPI) of the relay terminal.

S314: The first network element sends a second emergency call request to a second network element, where the second emergency call request carries the identifier of the relay terminal.

It should be noted that the second emergency call request is obtained based on the first emergency call request, with the identifier of the relay terminal added to the first emergency call request.

In the embodiments of this application, the first network element has the identifier of the relay terminal carried in the second emergency call request message, enabling the second network element to perform subsequent procedures of the emergency call based on the identifier of the relay terminal, ensuring the normal execution of the emergency call.

In the embodiments of this application, the second network element may be a functional entity in the core network for handling emergency call control, for example, the second network element may be an emergency call session control function (Emergency CSCF, E-CSCF).

In one implementation, the identifier of the relay terminal may be carried in a message header of the second emergency call request.

Optionally, the message header may include at least one of the following:
(1) a contact (Contact) message header; for example, contact:<relay UE identifier>; indication.
(2) a from (From) message header; for example, From:<relay UE identifier>; indication.
   The indication in (1) or (2) is used to indicate that the content within < > is the identifier of the relay UE, for example, relay UE ID.
(3) a P-Access-Network-Info (P-Access-Network-Info) message header; for example, P-Access-Network-Info:Access type"3GPP-NR-ProSe-L3UNR", relay UE identifier, where access type is a parameter of P-Access-Network-Info. In this implementation, a piece of information for carrying the relay UE ID is added to the access type parameter; or a parameter for carrying the relay UE ID is added to P-Access-Network-Info.

In one implementation, the first network element may determine, based on the value of the access type in the first emergency call request, to send the second emergency call request carrying the identifier of the relay terminal to the second network element. For example, the first network element may obtain the ID of the relay UE based on the access type "3GPP-NR-ProSe-L3UNR", and determine to send the identifier of the relay UE to the second network element.

It should be noted that the first network element determining, based on the value of the access type in the first emergency call request, to send the second emergency call request carrying the identifier of the relay terminal to the second network element can also be understood as the first network element determining, based on the access type in the first emergency call request, to send the second emergency call request carrying the identifier of the relay terminal to the second network element.

Through the emergency call handling method provided in the embodiments of this application, the first network element, upon receiving an emergency call request sent by a remote terminal, can obtain an identifier of a relay terminal corresponding to the remote terminal, and sends an emergency call request carrying the identifier of the relay terminal to the second network element. This enables the second network element to handle the subsequent procedures of the emergency call based on the identifier of the relay terminal, ensuring the success of the emergency call.

FIG. 4 is another schematic flowchart of an emergency call handling method according to an embodiment of this application. The method 400 may be performed by a second network element. In other words, the method may be performed by software or hardware installed on the second network element.

In the embodiments of this application, the second network element may be a functional entity for emergency call session control in a core network, for example, the second network element may be an emergency call session control function (Emergency CSCF, E-CSCF) in the core network. As shown in FIG. 4, the method may include the following steps.

S410: The second network element receives a second emergency call request sent by a first network element, where the second emergency call request carries an identifier of a relay terminal.

In the embodiments of this application, the second emergency call request may be sent by the first network element after it receives a first emergency call request sent by a remote terminal. The first network element may send the second emergency call request in the manner described in the method 300. For details, refer to the description in the method 300, which is not repeated herein.

In one implementation, the identifier of the relay terminal may be carried in a message header of the second emergency call request.

Optionally, the message header may include at least one of the following:
(1) a contact (Contact) message header; for example, contact:<relay UE identifier>; indication.
(2) a from (From) message header; for example, From:<relay UE identifier>; indication.
   The indication in (1) or (2) is used to indicate that the content within < > is the identifier of the relay UE, for example, relay UE ID.
(3) a P-Access-Network-Info (P-Access-Network-Info) message header; for example, P-Access-Network-Info:Access type"3GPP-NR-ProSe-L3UNR", relay UE identifier, where access type is a parameter of P-Access-Network-Info. In this implementation, a piece of information for carrying the relay UE ID is added to the access type parameter; or a parameter for carrying the relay UE ID is added to P-Access-Network-Info.

S412: The second network element sends the identifier of the relay terminal to a fourth network element.

In the embodiments of this application, the fourth network element may be a functional entity for location retrieval, for example, the fourth network element may be a location retrieval function (Location Retrieval Function, LRF) or a gateway mobile location center (Gateway Mobile Location Center, GMLC).

In one implementation, the second emergency call request may carry an access type, where a value of the access type includes any one of the following:
3GPP-NR-ProSe-L3UNR (3GPP-NR-ProSe-L3UNR); and
3GPP-E-UTRAN-ProSe-UNR (3GPP-E-UTRAN-ProSe-UNR).

In one implementation, before the second network element sends the identifier of the relay terminal to the fourth network element, the second network element may determine and obtain the identifier of the relay terminal carried in the second emergency call request based on the value of the access type.

Optionally, the second network element determines, based on the value of the access type, that the second emergency call request is triggered by a remote terminal connected through the relay terminal; and the second network element obtains the identifier of the relay terminal carried in the second emergency call request. For example, the second network element obtains the ID of the relay UE based on the access type "3GPP-NR-ProSe-L3UNR", and sends the identifier of the relay UE to the fourth network element. The second network element may obtain the ID of the relay UE from at least one of the message headers in the second emergency call request.

In the embodiments of this application, the second network element sends the identifier of the relay UE to the fourth network element, implementing acquisition of location information corresponding to the identifier of the relay UE through the fourth network element. Then, based on the location information, the second network element obtains a public safety answering point (Public Safety Access Point, PSAP) serving the remote UE, and completes the subsequent emergency call procedure.

For example, after S412, the fourth network element may obtain, based on the identifier of the relay terminal, an AMF serving the relay UE, and requests the location information of the relay UE from the AMF. The AMF then requests the location information of the relay UE from an LMF (Location Management Function, location management function), and returns the obtained location information of the relay UE to the fourth network element. The fourth network element returns the location information or a validation result to the second network element. The second network element obtains, based on the location information, a public safety answering point (Public Safety Access Point, PSAP) serving the UE, and completes the subsequent emergency call procedure.

In the technical solution provided in the embodiments of this application, after receiving the second emergency call request carrying the identifier of the relay terminal, the second network element sends the identifier of the relay terminal to the fourth network element to obtain the location information corresponding to the identifier, thereby providing emergency call services for the remote terminal.

The following describes the technical solution provided in the embodiments of this application by using an example that the first network element is a P-CSCF and the second network element is an E-CSCF.

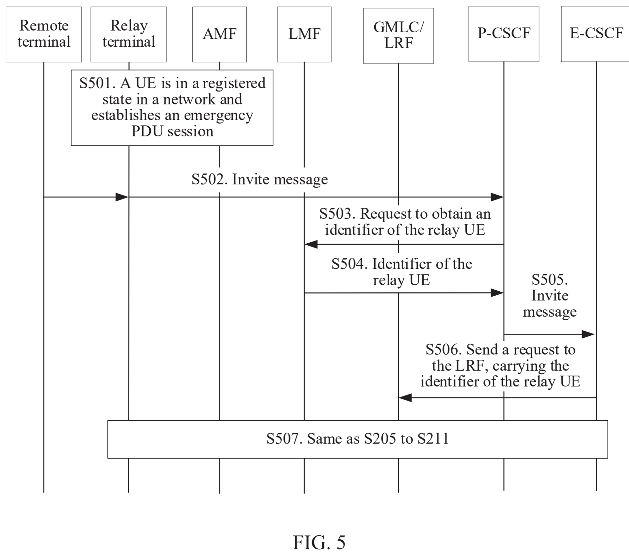

FIG. 5 is still another schematic flowchart of an emergency call handling method according to an embodiment of this application. As shown in FIG. 5, the method mainly includes the following steps.

S501: A remote UE establishes a PC5 connection to a relay UE.

In the embodiments of this application, the relay UE is in a registered state in a 5G network, and the relay UE has established an emergency protocol data unit (Protocol Data Unit, PDU) session (session).

S502: The remote UE initiates an IMS emergency call through an Invite message.

The Invite message may include the following information:
(1) IMS identifier information of the remote UE;
(2) location information of the relay UE, for example, the cell ID of the UE, where the remote UE obtains the location information of the relay UE from the relay UE; and
(3) access type "3GPP-NR-ProSe-L3UNR", where
   the access type "3GPP-NR-ProSe-L3UNR" indicates that the value of access type is "3GPP-NR-ProSe-L3UNR", which may also be expressed as access type="3GPP-NR-ProSe-L3UNR".

S503: The P-CSCF obtains an ID of the relay UE.

The identifier of the relay UE may include at least one of the following:
an MSISDN (Mobile Station International ISDN Number, mobile station international ISDN number);
a GPSI (Generic Public Subscription Identifier, generic public subscription identifier);
an IMSI (International Mobile Subscriber Identity, international mobile subscriber identity); and
an SUPI (SUbscription Permanent Identifier, subscription permanent identifier).

The P-CSCF determines, based on the access type"3GPP-NR-ProSe-L3UNR", that the Invite request is sent by the remote UE through the relay UE, and obtains the ID of the relay UE.

The ID of the relay UE may be obtained locally by the P-CSCF (for example, the ID of the relay UE obtained during IMS registration of the remote UE); or
the ID of the relay UE may be requested by the P-CSCF from the PCF, specifically, may be requested by the P-CSCF from the PCF through an Npcf_PolicyAuthorization_Create or Npcf_PolicyAuthorization_Update message request. The request includes the IP address of the relay UE, thereby obtaining the ID of the relay UE from the PCF.

S504: The P-CSCF receives the ID of the relay UE sent by the PCF.

S505: The P-CSCF sends an Invite message to the E-CSCF, where the Invite message carries the ID of the relay UE.

The ID of the relay UE may be carried in at least one of the following manners:
(1) carried through the Contact header; for example, contact:<relay UE identifier>; indication.
(2) carried through the From header; for example, From:<relay UE identifier>; indication.
   The indication is used to indicate that the content within < > is the identifier of the relay UE, for example, relay UE ID.
(3) carried through the P-Access-Network-Info header; for example, P-Access-Network-Info: Access type"3GPP-NR-ProSe-L3UNR", relay UE identifier.

The access type is a parameter of P-Access-Network-Info. In the embodiments of this application, a piece of information for carrying the relay UE ID is added to the access type parameter; or a parameter for carrying the relay UE ID is added to P-Access-Network-Info.

S506: The E-CSCF obtains the ID of the relay UE based on the access type "3GPP-NR-ProSe-L3UNR", and sends the identifier of the relay UE to an LRF.

The E-CSCF may obtain the ID of the relay UE from the message headers described in S505.

S507: Perform the subsequent procedures according to S205 to S211 in FIG. 2.

Through the technical solution of the embodiments of this application, after receiving the emergency call request sent by the remote UE, the P-CSCF obtains the identifier of the relay UE corresponding to the remote UE, adds the identifier of the relay UE to the emergency call request, and sends it to the E-CSCF. The E-CSCF sends the identifier of the relay UE to the LRF, ensuring that the location validation or retrieval procedure can be performed correctly, ensuring correct execution of the emergency call.

The emergency call handling method according to the embodiments of this application may be performed by an emergency call handling apparatus. In the embodiments of this application, the emergency call handling apparatus performing the emergency call handling method is used as an example to describe the emergency call handling apparatus according to the embodiments of this application.

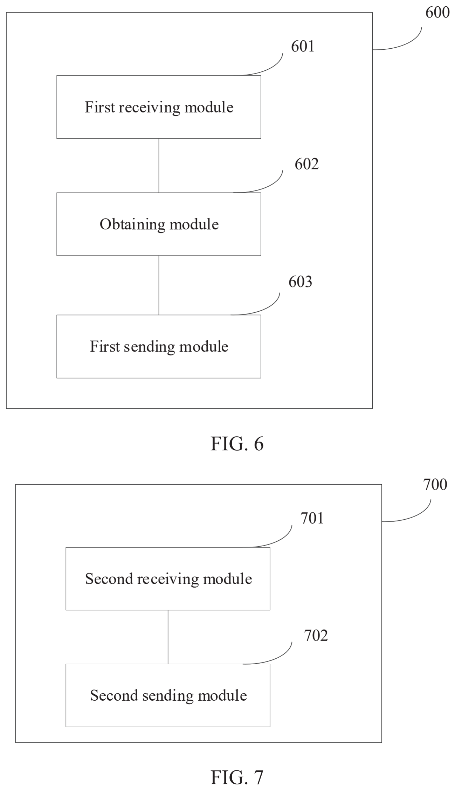

FIG. 6 is a schematic structural diagram of an emergency call handling apparatus according to an embodiment of this application. As shown in FIG. 6, the apparatus 600 mainly includes: a first receiving module 601, an obtaining module 602, and a first sending module 603.

In the embodiments of this application, the first receiving module 601 is configured to receive a first emergency call request sent by a remote terminal; the obtaining module 602 is configured to obtain an identifier of a relay terminal corresponding to the remote terminal; and the first sending module 603 is configured to send a second emergency call request to a second network element, where the second emergency call request carries the identifier of the relay terminal.

In one implementation, the first emergency call request carries an access type, where a value of the access type includes any one of the following: 3GPP-NR-ProSe-L3UNR; and 3GPP-E-UTRAN-ProSe-UNR.

In one implementation, the obtaining module 602 obtaining the identifier of the relay terminal includes: obtaining the identifier of the relay terminal based on the value of the access type.

In one implementation, the obtaining module 602 obtaining the identifier of the relay terminal corresponding to the remote terminal based on the access type includes:
determining, based on the value of the access type, that the first emergency call request is sent by the remote terminal through the relay terminal; and
obtaining the identifier of the relay terminal.

In one implementation, the obtaining module 602 obtaining the identifier of the relay terminal includes one of the following:
obtaining the identifier of the relay terminal locally; and
obtaining the identifier of the relay terminal from a third network element.

In one implementation, that the second emergency call request carries the identifier of the relay terminal includes:
the identifier of the relay terminal is carried in a message header of the second emergency call request.

In one implementation, the message header includes at least one of the following:
a Contact message header;
a From message header; and
a P-Access-Network-Info message header.

In one implementation, the first sending module 603 sending the second emergency call request to the second network element includes: sending the second emergency call request carrying the identifier of the relay terminal to the second network element based on the value of the access type.

In one implementation, the identifier of the relay terminal includes at least one of the following:
a mobile station international integrated services digital network ISDN number of the relay terminal;
a generic public subscription identifier of the relay terminal;
an international mobile subscriber identity of the relay terminal; and
a subscription permanent identifier of the relay terminal.

The apparatus according to the embodiments of this application, when receiving an emergency call request sent by a remote terminal, can obtain an identifier of a relay terminal corresponding to the remote terminal, and add the identifier of the relay terminal to the emergency call request, implementing handling of an emergency call of the remote terminal based on a location of the relay terminal, thereby ensuring the success of the emergency call of the remote terminal.

FIG. 7 is another schematic structural diagram of an emergency call handling apparatus according to an embodiment of this application. As shown in FIG. 7, the apparatus 700 mainly includes: a second receiving module 701 and a second sending module 702.

In the embodiments of this application, the second receiving module 701 is configured to receive a second emergency call request sent by a first network element, where the second emergency call request carries an identifier of a relay terminal; and the second sending module 702 is configured to send the identifier of the relay terminal to a fourth network element.

In one implementation, the second emergency call request carries an access type, where a value of the access type includes any one of the following:
3GPP-NR-ProSe-L3UNR; and
3GPP-E-UTRAN-ProSe-UNR.

In one implementation, the apparatus further includes: an obtaining module configured to obtain the identifier of the relay terminal carried in the second emergency call request based on the value of the access type.

In one implementation, the obtaining the identifier of the relay terminal carried in the second emergency call request based on the value of the access type includes:
determining, based on the value of the access type, that the second emergency call request is triggered by a remote terminal connected through the relay terminal; and
obtaining the identifier of the relay terminal carried in the second emergency call request.

In one implementation, the identifier of the relay terminal is carried in a message header of the second emergency call request.

In one implementation, the message header includes one of the following:
a contact Contact message header;
a from From message header; and
a P-Access-Network-Info P-Access-Network-Info message header.

The apparatus according to the embodiments of this application sends, when receiving an emergency call carrying an identifier of a relay terminal, the identifier of the relay terminal is sent to the fourth network element, thereby obtaining location information of the relay terminal from the fourth network element and implementing an emergency call of the remote terminal based on the location information of the relay terminal.

The emergency call handling apparatus in the embodiments of this application may be an electronic device, for example, an electronic device having an operating system, or may be a component in an electronic device, for example, an integrated circuit or a chip. The electronic device may be a server, a network attached storage (Network Attached Storage, NAS), or the like, which is not specifically limited in the embodiments of this application.

The emergency call handling apparatus according to the embodiments of this application can implement the processes implemented by the method embodiments of FIG. 3 to FIG. 5, with the same technical effects achieved. To avoid repetition, details are not described herein again.

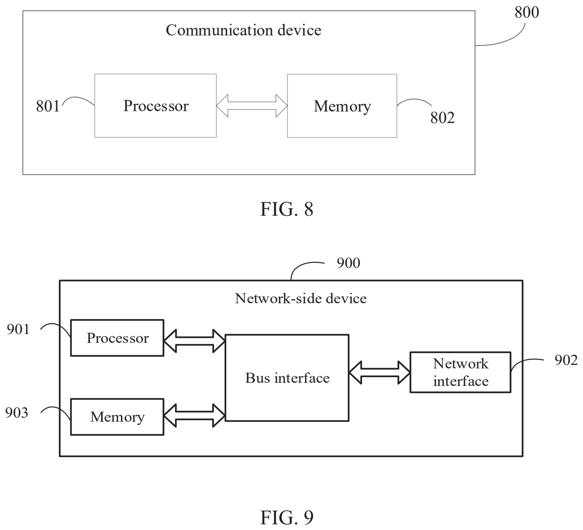

As shown in FIG. 8, an embodiment of this application further provides a communication device 800 including a processor 801 and a memory 802. The memory 802 stores a program or instructions capable of running on the processor 801. For example, in a case that the communication device 800 is a network-side device, when the program or instructions are executed by the processor 801, the steps of the above emergency call handling method embodiments are implemented, with the same technical effects achieved. To avoid repetition, details are not described herein again.

Specifically, an embodiment of this application further provides a network-side device. As shown in FIG. 9, the network-side device 900 includes: a processor 901, a network interface 902, and a memory 903. The network interface 902 is, for example, a common public radio interface (common public radio interface, CPRI).

Specifically, the network-side device 900 according to the embodiment of this application further includes: instructions or a program stored in the memory 903 and capable of running on the processor 901. The processor 901 calls the instructions or program in the memory 903 to perform the method performed by the modules shown in FIG. 6 or FIG. 7, with the same technical effects achieved. To avoid repetition, details are not described herein again.

An embodiment of this application further provides a readable storage medium. The readable storage medium stores a program or instructions. When the program or instructions are executed by a processor, the processes of the above emergency call handling method embodiments are implemented, with the same technical effects achieved. To avoid repetition, details are not described herein again.

The processor is the processor in the terminal described in the above embodiments. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface, where the communication interface is coupled to the processor, and the processor is configured to run a program or instructions to implement the processes of the above emergency call handling method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium. The computer program/program product is executed by at least one processor to implement the processes of the above emergency call handling method embodiments, with the same technical effects achieved. To avoid repetition, details are not described herein again.

An embodiment of this application further provides an emergency call handling system including a first network element and a second network element. The first network element may be configured to perform the steps of the emergency call handling method described in FIG. 3, and the second network element may be configured to perform the steps of the emergency call handling method described in FIG. 4.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, a person skilled in the art may clearly understand that the method in the foregoing embodiments may be implemented by a computer software product with a necessary general hardware platform. Certainly, the method in the foregoing embodiments may also be implemented by hardware. The computer software product is stored in a storage medium (such as a ROM, a RAM, a magnetic disk, or an optical disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As inspired by this application, a person of ordinary skill in the art may develop many other implementations without departing from principles of this application and the protection scope of the claims, and all such implementations shall fall within the protection scope of this application.

## Claims

1. An emergency call handling method, comprising:
receiving, by a first network element, a first emergency call request sent by a remote terminal;
obtaining, by the first network element, an identifier of a relay terminal corresponding to the remote terminal; and
sending, by the first network element, a second emergency call request to a second network element, wherein the second emergency call request carries the identifier of the relay terminal.

2. The method according to claim 1, wherein the first emergency call request carries an access type, and a value of the access type comprises any one of the following:
3GPP-NR-ProSe-L3UNR 3GPP-NR-ProSe-L3UNR; and
3GPP-E-UTRAN-ProSe-UNR 3GPP-E-UTRAN-ProSe-UNR.

3. The method according to claim 1 or 2, wherein the first emergency call request carries an access type, and the obtaining, by the first network element, the identifier of the relay terminal comprises:
obtaining, by the first network element, the identifier of the relay terminal based on the value of the access type.

4. The method according to claim 3, wherein the obtaining, by the first network element, the identifier of the relay terminal corresponding to the remote terminal based on the access type comprises:
determining, by the first network element based on the value of the access type, that the first emergency call request is sent by the remote terminal through the relay terminal; and
obtaining, by the first network element, the identifier of the relay terminal.

5. The method according to any one of claims 1 to 4, wherein the obtaining, by the first network element, the identifier of the relay terminal comprises one of the following:
obtaining, by the first network element, the identifier of the relay terminal locally; and
obtaining, by the first network element, the identifier of the relay terminal from a third network element.

6. The method according to claim 5, wherein the third network element comprises a policy control function PCF.

7. The method according to claim 1, wherein that the second emergency call request carries the identifier of the relay terminal comprises:
the identifier of the relay terminal is carried in a message header of the second emergency call request.

8. The method according to claim 7, wherein the message header comprises at least one of the following:
a contact Contact message header;
a from From message header; and
a P-Access-Network-Info P-Access-Network-Info message header.

9. The method according to claim 2, wherein the sending, by the first network element, a second emergency call request to a second network element comprises:
sending, by the first network element, the second emergency call request carrying the identifier of the relay terminal to the second network element based on the value of the access type.

10. The method according to any one of claims 1 to 8, wherein the identifier of the relay terminal comprises at least one of the following:
a mobile station international integrated services digital network ISDN number of the relay terminal;
a generic public subscription identifier of the relay terminal;
an international mobile subscriber identity of the relay terminal; and
a subscription permanent identifier of the relay terminal.

11. The method according to any one of claims 1 to 10, wherein the first network element comprises a proxy call session control function P-CSCF, and the second network element comprises an emergency call session control function E-CSCF.

12. An emergency call handling method, comprising:
receiving, by a second network element, a second emergency call request sent by a first network element, wherein the second emergency call request carries an identifier of a relay terminal; and
sending, by the second network element, the identifier of the relay terminal to a fourth network element.

13. The method according to claim 12, wherein the second emergency call request carries an access type, and a value of the access type comprises any one of the following:
3GPP-NR-ProSe-L3UNR 3GPP-NR-ProSe-L3UNR; and
3GPP-E-UTRAN-ProSe-UNR 3GPP-E-UTRAN-ProSe-UNR.

14. The method according to claim 13, wherein the method further comprises:
obtaining, by the second network element based on the value of the access type, the identifier of the relay terminal carried in the second emergency call request.

15. The method according to claim 14, wherein the obtaining, by the second network element based on the value of the access type, the identifier of the relay terminal carried in the second emergency call request comprises:
determining, by the second network element based on the value of the access type, that the second emergency call request is triggered by a remote terminal connected through the relay terminal; and
obtaining, by the second network element, the identifier of the relay terminal carried in the second emergency call request.

16. The method according to any one of claims 12 to 15, wherein the identifier of the relay terminal is carried in a message header of the second emergency call request.

17. The method according to claim 16, wherein the message header comprises one of the following:
a contact Contact message header;
a from From message header; and
a P-Access-Network-Info P-Access-Network-Info message header.

18. The method according to any one of claims 12 to 17, wherein the first network element comprises a proxy call session control function P-CSCF, the second network element comprises an emergency call session control function E-CSCF, and the fourth network element comprises a location retrieval function LRF.

19. An emergency call handling apparatus, comprising:
a first receiving module configured to receive a first emergency call request sent by a remote terminal;
an obtaining module configured to obtain an identifier of a relay terminal corresponding to the remote terminal; and
a first sending module configured to send a second emergency call request to a second network element, wherein the second emergency call request carries the identifier of the relay terminal.

20. An emergency call handling apparatus, comprising:
a second receiving module configured to receive a second emergency call request sent by a first network element, wherein the second emergency call request carries an identifier of a relay terminal; and
a second sending module configured to send the identifier of the relay terminal to a fourth network element.

21. A network-side device, comprising a processor and a memory, wherein the memory stores a program or instructions capable of running on the processor, and when the program or instructions are executed by the processor, the steps of the emergency call handling method according to any one of claims 1 to 18 are implemented.

22. A readable storage medium, wherein the readable storage medium stores a program or instructions, and when the program or instructions are executed by a processor, the steps of the emergency call handling method according to any one of claims 1 to 18 are implemented.
